# EUROPEAN PATENT APPLICATION

(11) **EP 2 749 788 A2**
(43) Date of publication of application: **02.07.2014**
(21) Application number: 13193582.7
(22) Date of filing: 19.11.2013
(51) Int. Cl.: F16F 15/134

(54) **Dual mass flywheel**

(30) Priority: 27.12.2012 KR 20120154851
(71) Applicant: Pyeong Hwa Clutch Industry Co. Ltd., Dalseo-Gu (KR)
(72) Inventor: Lee, Chun Gon, Dalseo-Gu (KR); Kim, Chung Jong, Dalseo-Gu (KR)
(74) Representative: Misselbrook, Paul

(57) **Abstract**

A dual mass flywheel includes: a primary flywheel having a ring gear and connected to an output shaft of an engine; a secondary flywheel connected to an input shaft of a transmission; a coupling unit for coupling the primary flywheel and the secondary flywheel; a plurality of drive units coupled to the primary flywheel and the secondary flywheel and in which spring guides are coupled to opposite sides of a torsion spring to dampen noise and vibrations while a torque of the primary flywheel is transferred to the secondary flywheel, a unit groove formed in the primary flywheel to accommodate the drive units; separation prevention bosses formed above and below a center line of the unit groove and having an operation slot therebetween to prevent deviation of the drive units; and driving pins protruding from a bottom surface of the secondary flywheel to compress and damp the drive units, wherein a linear spring and a curved spring of a torsion spring are combined between an end guide and a middle guide or between the middle guides to prevent a contacting point thereof from being pushed to the outside by a centrifugal force when the drive unit is operated.

## Description

### BACKGROUND OF THE INVENTION

### 1. Field of the invention

The present invention relates to a dual mass flywheel, and more particularly to an improved dual mass flywheel which effectively mitigates an impact and noise generated while causing no loss of torque in a process of transferring power of an engine to a transmission and has a simpler configuration due to a decreased number of components.

### 2. Description of the Prior Art

A dual mass flywheel (DMF) for a vehicle is adapted to mitigate an impact between an engine and a transmission due to a dampening operation of an arc spring while a driving plate connecting a primary flywheel and a secondary flywheel are moved in conjunction with an arc spring mounted to the primary mass, thereby reducing vibrations and noise due to an abrupt acceleration of a vehicle such as gear noise and body booming.

If a driving force of the engine is transferred to the primary mass due to the above-described technical configuration, the driving plate is rotated while the primary mass is rotated, rotating the secondary mass connected to the transmission.

Then, since a rotation power of the primary mass presses one end of the arc spring and the driving plate is rotated while being pressed by an opposite end of the arc spring, a collision of the primary mass and the driving plate generated when the primary mass is abruptly rotated by a driving power of the engine or a rotation speed of the secondary mass is abruptly reduced can be prevented by the arc spring.

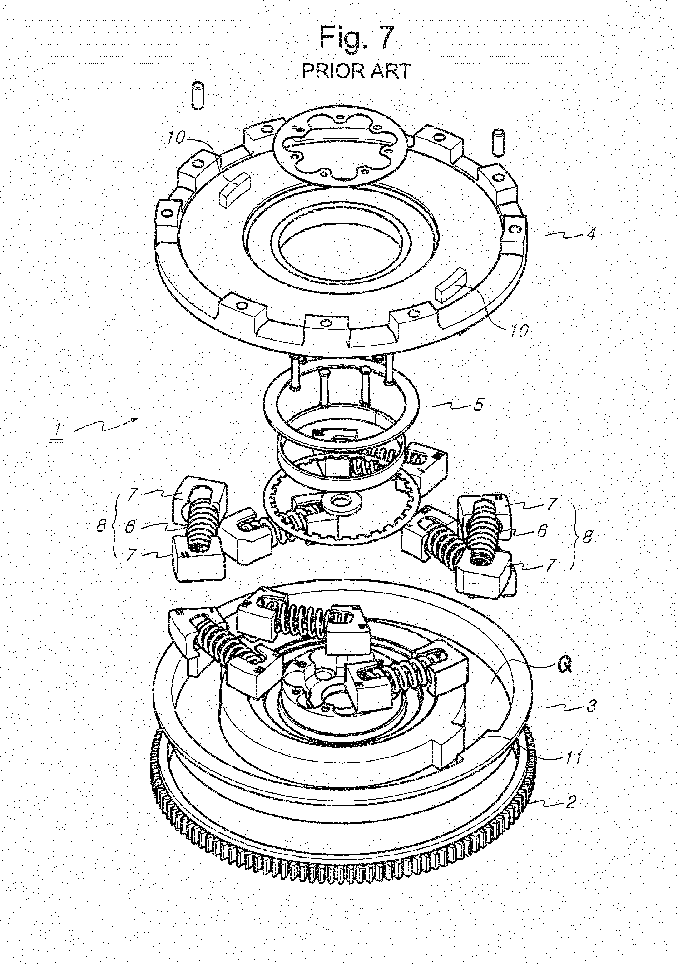

Such dual mass flywheels have been developed and used in various forms according to the related art, and the applicant of the present invention also filed a patent application (Korean Patent Application No. 2012-134598) regarding a dual mass flywheel, which will be described with reference to FIG. 7.

The dual mass flywheel 1 according to the related art includes a primary flywheel 3 having a ring gear 2 and coupled to an output shaft of an engine, a secondary flywheel 4 connected to an input shaft of a transmission, and a coupling element 5 as a unit for coupling the primary flywheel 3 and the secondary flywheel 4.

A plurality of drive units 8 coupled to the primary flywheel 3 and the secondary flywheel 4 to transfer a torque of the primary flywheel 3 to the secondary flywheel 4 while dampening noise and vibrations generated in the torque transferring process and in which spring guides 7 are coupled to opposite sides of a torsion spring 6 are provided.

The drive units 8 are accommodated in a unit groove Q integrally formed in the primary flywheel 3, and driving pins 10 protruding from a bottom surface of the secondary flywheel 4 are located in operation slots 11 formed in the unit groove Q to press the drive units 8.

The dual mass flywheel according to the related art uses a principle of generating a torque by an operation angle formed by circumferentially moving a spring with a driving plate, and thus since a force of deviating the spring to an outer circumferential side in the process of circumferentially compressing or expanding the spring is strongly applied, the spring guides accommodating and guiding the spring receives the force, generating friction with the unit groove.

In this process, since a force of the spring is concentrated on an outer portion of the unit groove while the spring constituting the drive unit is operated circumferentially, the spring guides maintain the spring contact with the unit groove, generating a joint.

Grease is applied to the spring or the spring guides holding the spring to reduce frictional resistance while reducing the joint, in which case grease may be leaked in the operation process to disturb normal operation of another component, and when a sealing unit for preventing leakage of grease, the number of components is increased.

Since the spring guides and the unit groove make surface contacts with each other even when lubricant is applied to the spring guides, friction is severe. Further, frictional resistance becomes more sever due to the viscosity of grease applied for lubrication, making a smooth operation thereof difficult.

In particular, since the force transferred to the spring guides is concentrated on an outer circumferential side, the spring guides make severe contacts with an inner wall of the unit groove. Further, since the spring guides are accommodated in the unit groove, a length of an outer circumference to which a force is transferred is longer than a length of an inner circumference thereof, making frictional resistance more severe.

Further, since the spring maintained by the spring guides uses only a linear coil spring, various noises and vibrations cannot be absorbed and the spring guides surround an outer side of the spring, the spring cannot be stably and firmly maintained.

### SUMMARY OF THE INVENTION

Accordingly, the present invention has been made to solve the above-mentioned problems occurring in the prior art, and an object of the present invention is to provide an improved dual mass flywheel which effectively mitigates an impact and noise generated while causing no loss of torque in a process of transferring power of an engine to a transmission and has a simpler configuration due to a decreased number of components.

In order to accomplish this object, there is provided a dual mass flywheel including: a primary flywheel having a ring gear and connected to an output shaft of an engine; a secondary flywheel connected to an input shaft of a transmission; a coupling unit for coupling the primary flywheel and the secondary flywheel; a plurality of drive units coupled to the primary flywheel and the secondary flywheel and in which spring guides are coupled to opposite sides of a torsion spring to dampen noise and vibrations while a torque of the primary flywheel is transferred to the secondary flywheel; a unit groove formed in the primary flywheel to accommodate the drive units; separation prevention bosses formed above and below a center line of the unit groove and having an operation slot therebetween to prevent deviation of the drive units; and driving pins protruding from a bottom surface of the secondary flywheel to compress and damp the drive units, wherein a linear spring and a curved spring of a torsion spring are combined between an end guide and a middle guide or between the middle guides to prevent a contacting point thereof from being pushed to the outside by a centrifugal force when the drive unit is operated.

According to the present invention, there is provided a dual mass flywheel comprising: a primary flywheel having a ring gear and connected to an output shaft of an engine; a secondary flywheel connected to an input shaft of a transmission; a coupling unit for coupling the primary flywheel and the secondary flywheel; a plurality of drive units in which spring guides are coupled to opposite sides of a torsion spring arranged to dampen noise or vibration while a torque of the primary flywheel is transferred to the secondary flywheel; a unit groove formed in the primary flywheel, arranged to accommodate the drive units; separation prevention bosses having an operation slot therebetween, formed to prevent deviation of the drive units; and driving pins protruding from a bottom surface of the secondary flywheel to engage, compress or damp the drive units, wherein a combination of a linear spring and a curved spring of a torsion spring is arranged so that one is located between an end guide and a middle guide and the other is located between the middle guides to prevent a contact point of a guide body of the middle guide from being forced outside a rest position by a centrifugal force when the dual mass flywheel is in use.

The rest position is a position of the guide body when no centrifugal force is present.

The torsion spring may comprise: a linear spring interposed between an end guide and a middle guide; and a curved spring interposed between middle guides, whereby the contact point thereof is prevented from being forced outside a rest position by a centrifugal force generated when the dual mass flywheel is in use.

The drive units may be coupled to the primary flywheel or the secondary flywheel,

The spring guides coupled to the opposite sides of a torsion spring constitute a drive unit. One or more embossments are formed on an outer surface of each of the spring guides to minimize a friction surface area thereof with the unit groove.

The dual mass flywheel may comprise: two pairs of separation prevention bosses which are integrally and separately formed to prevent a first and second set of drive units coupled to the unit groove from deviating from a proper and/or intended position thereof; a pair of operation slots which are provided so that driving pins can be located between the pair of separation prevention bosses; and the two pairs of separation prevention bosses group the plurality of drive units into the first and second set of drive units

The dual mass flywheel may comprise spring maintainers integrally formed at opposite ends of the end guide or the middle guide to retain, or maintain a relative position of, the torsion spring.

An inner circumferential surface and an outer circumferential surface of the guide body of the middle guide contacts, respectively, an inner wall surface and an outer wall surface of the unit groove formed in the primary flywheel, when in use. A first tangent of a central portion of the inner circumferential surface and a second tangent of a central portion of the outer circumferential surface may be at a predetermined angle θ so that the inner circumferential surface and the outer circumferential surface of the guide body are spaced apart from the inner wall surface and the outer wall surface of the unit groove respectively, and the guide body maintains a contact point P with the inner and outer wall surfaces of the unit groove.

The spring maintainer may further comprise a spring groove formed at opposite sides of the guide body of the end guide or the middle guide arranged to accommodate opposite ends of an outer diameter part of the linear spring or the curved spring, and a maintaining boss coupled to and maintained at an inner diameter part of the linear spring or the curved spring near a center of the spring groove.

The present invention combines linear and curved coil springs as a spring to absorb noise and vibrations, and improves a structure of a spring guide to minimize frictional resistance and secure operability, thereby improving performance and durability of a dual mass flywheel while securing competitiveness.

### BRIEF DESCRIPTION OF THE DRAWINGS

The above and other objects, features and advantages of the present invention will be more apparent from the following detailed description taken in conjunction with the accompanying drawings, in which:
FIG. 1 is an exploded perspective view showing a dual mass flywheel according to the present invention;
FIG. 2 shows perspective views showing a top of a primary flywheel and a bottom of a secondary flywheel of the dual mass according to the present invention;
FIG. 3 is a plan view showing a state in which a spring and spring guides are mounted to the dual mass flywheel according to the present invention;
FIG. 4 is a perspective view showing a spring guide applied to the dual mass flywheel according to the present invention;
FIG. 5 is a schematic diagram showing a mounted state of the spring guide applied to the dual mass flywheel according to the present invention;
FIG. 6 is a plan view showing an operation state of the dual mass flywheel according to the present invention; and
FIG. 7 is an exemplary view showing a dual mass flywheel according to the related art.

### DETAILED DESCRIPTION OF THE PREFERRED EMBODIMENTS

Hereinafter, an exemplary embodiment of the present invention for achieving the above objective will be described with reference to the accompanying drawings.

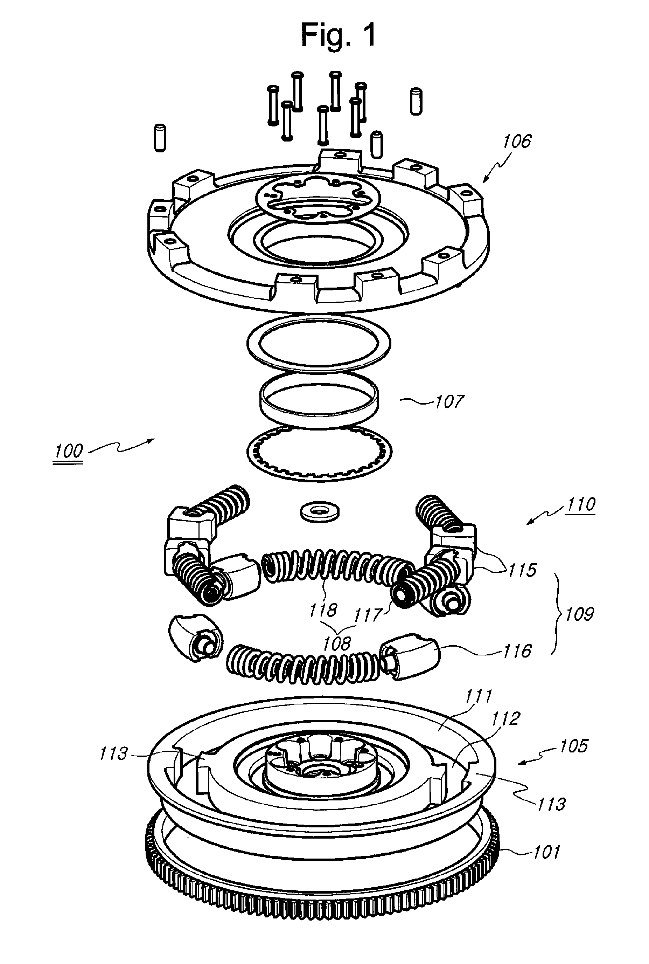

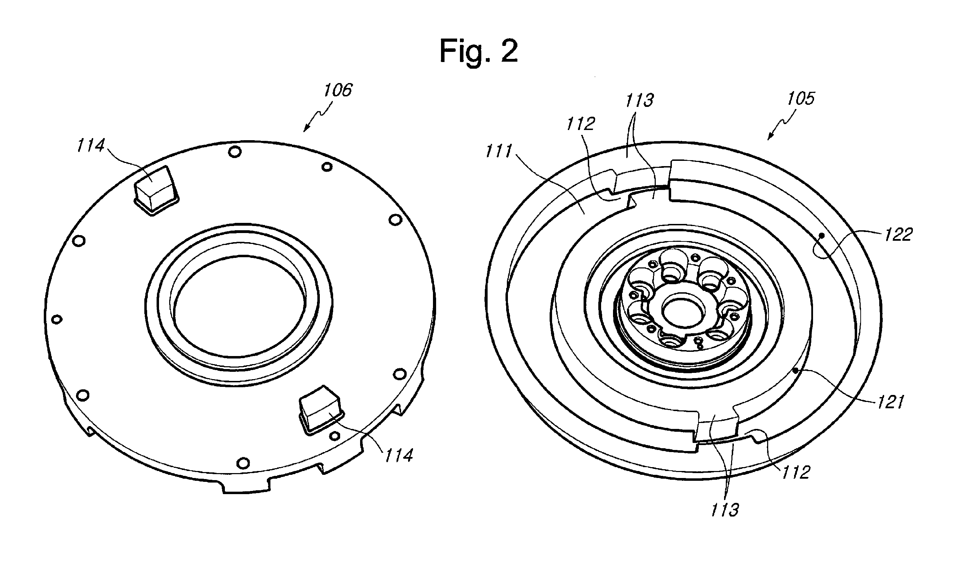

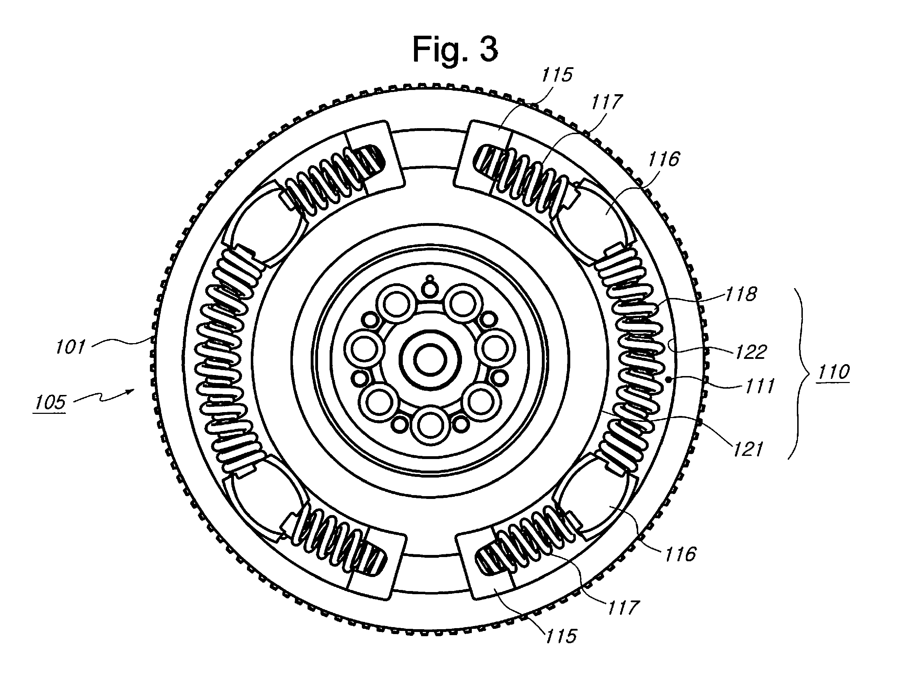

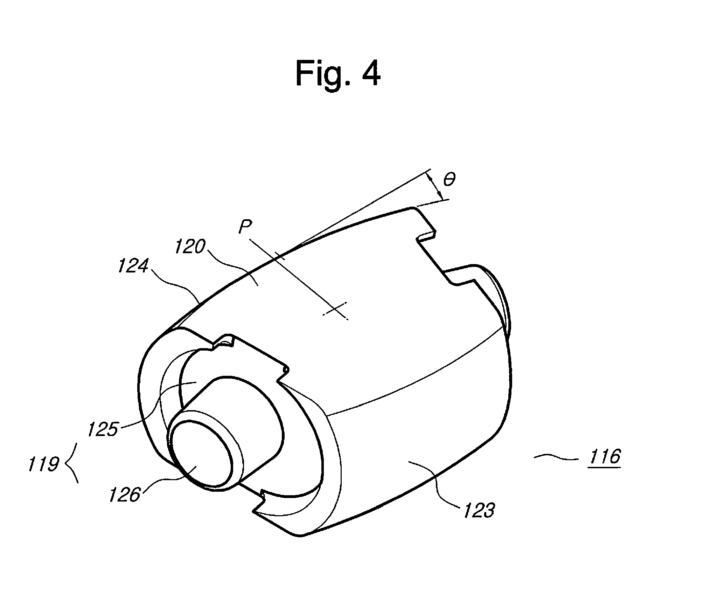

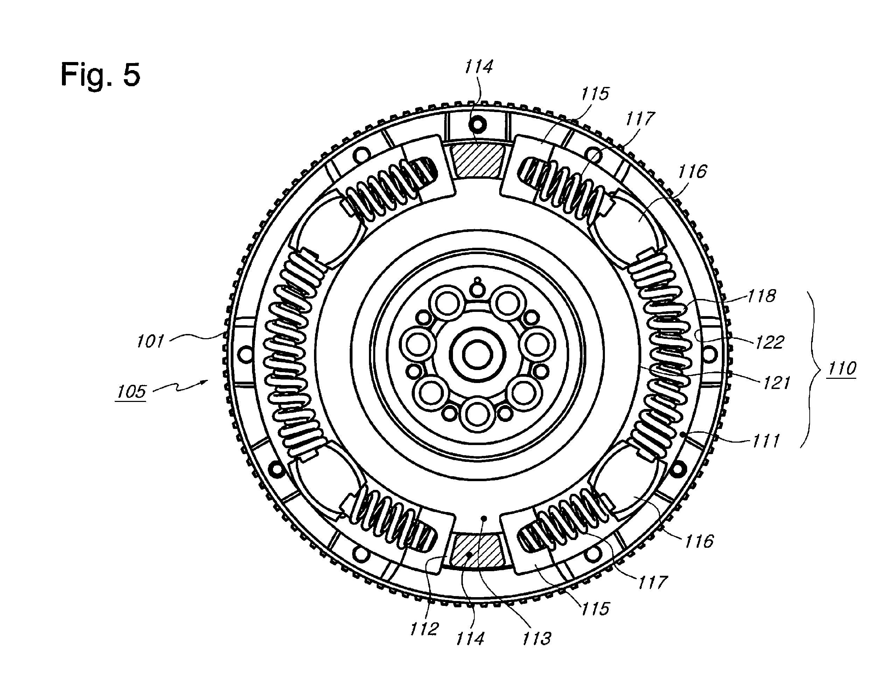

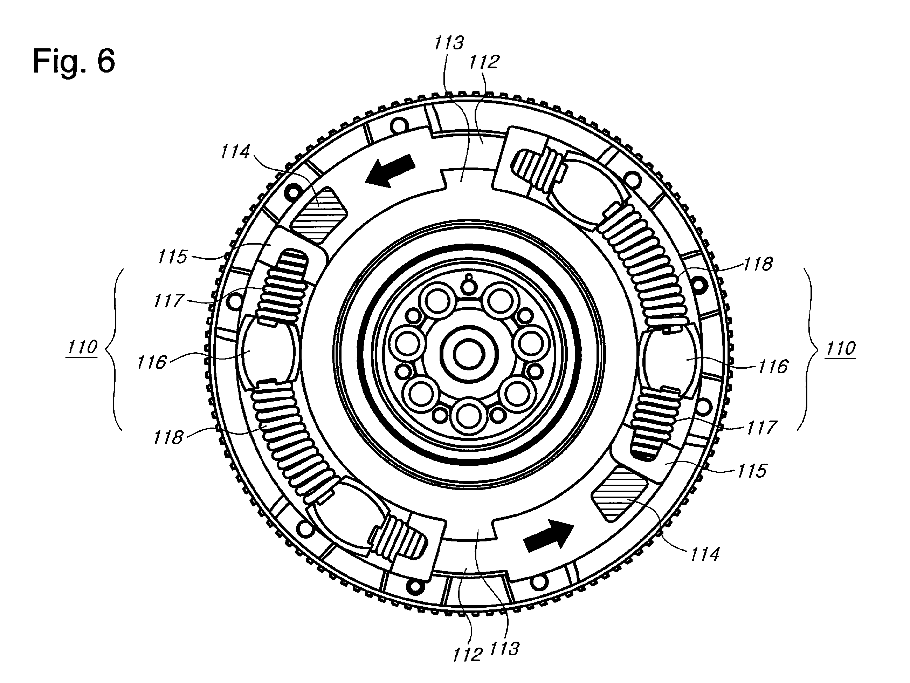

FIG. 1 is an exploded perspective view showing a dual mass flywheel according to the present invention. FIG. 2 shows perspective views showing a top of a primary flywheel and a bottom of a secondary flywheel of the dual mass according to the present invention. FIG. 3 is a plan view showing a state in which a spring and spring guides are mounted to the dual mass flywheel according to present invention. FIG. 4 is a perspective view showing a spring guide applied to the dual mass flywheel according to the related art. FIG. 5 is a schematic diagram showing a mounted state of the spring guide applied to the dual mass flywheel according to the present invention. FIG. 6 is a plan view showing an operation state of the dual mass flywheel according to the present invention.

As shown in FIG. 1, the dual mass flywheel 100 according to the related art includes a primary flywheel 105 having a ring gear 101 and connected to an output shaft of an engine, a secondary flywheel 106 connected to an input shaft of a transmission, a coupling unit 107 for coupling the primary flywheel 105 and the secondary flywheel 106, the coupling unit 107 having an ancillary configuration such as a sleeve, a bushing, a rivet, and a flange, a drive unit 110 coupled to an upper surface (with reference to FIG. 1) of the primary flywheel 105 and a bottom surface of the secondary flywheel 106 and configured by coupling spring guides 109 to opposite sides of a torsion spring 108 to dampen noise and vibrations generated while a torque of the primary flywheel 105 is transmitted to the secondary flywheel 106.

A unit groove 111 for accommodating the drive unit 110 is formed in the primary flywheel 105, and two pairs of separation prevention bosses 113 each of which has an operation slot 112 therebetween are formed above and below a center line of the unit groove 111 to prevent the left and right drive units 110 from deviating from proper positions thereof.

A pair of driving pins 114 for pressing and dampening the drive unit 110 during a rotation of the drive unit 110 integrally protrudes from a bottom surface of the secondary flywheel 106 such that they are located in the operation slots 112 formed between the separation prevention bosses 114 formed in the primary flywheel 105 to press the drive unit 110.

The present invention improves a torsion spring 108 and spring guides 109 constituting the drive unit 110 so that the torsion spring 108 can be stably held, and minimizes frictional resistance with the unit groove 111 in the operation process to secure operability.

To this end, in the torsion spring 108, a linear spring 117 is interposed between an end guide 115 and a middle guide 116 and a curved spring 118 is interposed between the middle guides 116 to prevent a contacting point thereof from being pushed to the outside by a centrifugal force, thereby absorbing various noises and vibrations.

One linear spring 117 and one curved spring 118 may be provided, but a dual structure in which a small diameter linear spring and a small diameter curved spring are installed within a large diameter linear spring 117 and a large diameter curved spring 118 may be provided.

A guide body 120 whose upper and lower surfaces are flat is formed by integrally forming spring maintainers 119 at opposite sides of the spring guide 109 including the end guides 115 and the middle guides 116 so that the torsion spring 108 can be maintained.

An inner circumferential surface 123 and an outer circumferential surface 124 of the guide body 120 contacting an inner wall surface 121 and an outer wall surface 122 of the unit groove 111 formed in the primary flywheel 105 are inclined toward the guide body 120 by a predetermined angle θ to be spaced apart from the inner wall surface 121 and the outer wall surface 122 of the unit groove 111 at a contacting point P of the guide body 120 so that the guide body 120 can always maintain point contacts with the inner and outer wall surfaces 121 and 122 of the unit groove 111 even if centrifugal force is generated when the dual mass flywheel 100 is operated, minimizing frictional resistance.

Namely, an inner circumferential surface 123 and an outer circumferential surface 124 of the guide body 120 of the middle guide 116 contacting an inner wall surface 121 and an outer wall surface 122 of the unit groove 111 formed in the primary flywheel 105 are inclined to make a predetermined angle θ between the tangents of central portions of the inner circumferential surface 123 and the outer circumferential surface 124, and an inner circumferential surface 121 and an outer circumferential surface 122 of the guide body 120 of the middle guide 116 respectively, to be spaced apart from the inner wall surface 121 and the outer wall surface 122 of the unit groove 111 so that the guide body 120 maintains a contacting point P contacts with the inner and outer wall surfaces 121,122 of the unit groove 111.

The angle θ formed on the inner surface 123 and the outer surface 124 of the guide body 120 is not limited, but when the angle θ is too gentle, they may contact the inner wall surface 121 and the outer wall surface 122 of the unit groove 111, whereas when the angle θ is too large, the point contact may be excellent but it becomes difficult to form the spring maintainer 119 for maintaining the spring 108.

Spring grooves 125 and the spring maintainers 119 are formed at opposite sides of the guide body 120 of the middle guide 116 to accommodate opposite ends of the linear spring 117 and the curved spring 118, and a maintaining boss 126 protrudes at a center of the spring groove 125 to be coupled to and maintained at inner diameter parts of the linear spring 117 and the curved spring 118.

An operation state of the dual mass flywheel 100 according to the present invention will be described below.

The present invention is adapted to transmit rotation power of the primary flywheel 105 connected to an output shaft of the engine to the second flywheel 106 to transmit the rotation power to the transmission, normally transmit a torque necessary for travel of the vehicle in the process, and reduce noise, an impact, and vibrations generated in the power transmitting process. It is well known in the art that the function of the present invention is performed by the drive unit 100 interposed between the primary flywheel 105 and the secondary flywheel 106, and a detailed description thereof will be omitted and effects and advantages of the present invention will be described below.

The main feature of the dual mass flywheel 100 according to the present invention is that the middle guide 116 constituting the spring guide 109 inserted into the unit groove 111 formed in the primary flywheel 105 maintains point contacts with the inner wall surface 121 and the outer wall surface 122 of the unit groove 111 to be operated, minimizing frictional resistance and securing operability during an operation process.

Since the inner circumferential surface 123 and the outer circumferential surface 124 of the middle guide 116 of the guide body 120 do not have the same circumferences as those of the inner wall surface 121 and the outer wall surface 122 of the unit groove 111 except the contacting point P, but have curves of a predetermined angle θ, only the contacting point P of the guide body 120 can maintain to contacts with the inner wall surface 121 and the outer wall surface 122 of the unit groove 111.

Further, since the torsion spring 108 is dually configured by the linear spring 117 interposed between the end guide 115 and the middle guide 116 and the curved spring 118 interposed between the middle guides 116, the contacting point thereof is prevented from being pushed to the outside by a centrifugal force generated when the dual mass flywheel 100 is operated, and thus various noise and vibrations can be absorbed.

Further, since the torsion spring 108 is dually configured by the linear spring 117 and the curved spring 118, it can be designed easily, considering centrifugal force, centripetal force, noise, and vibrations, while securing variability in many different ways.

In particular, according to the present invention, the spring maintainers 119 formed at opposite sides of the end guide 115 and the middle guide 116 is constituted by the maintaining bosses 126 for maintaining the spring groove 125 for accommodating the outer diameter part of the torsion spring 108 and the inner diameter part of the torsion spring 108, stably holding the torsion spring 108 and securing operability.

The present invention improves the spring guides and the springs constituting the drive unit for point contact to minimize frictional resistance, thereby securing operability, and absorbs noise and vibrations of various characteristics to increase quality and durability.

## Claims

1. A dual mass flywheel(100) comprising:
a primary flywheel(105) having a ring gear(101) and connected to an output shaft of an engine;
a secondary flywheel(106) connected to an input shaft of a transmission;
a coupling unit(107) for coupling the primary flywheel(105) and the secondary flywheel(106);
a plurality of drive units(110) coupled to the primary flywheel(105) and the secondary flywheel(106) and in which spring guides(109) are coupled to opposite sides of a torsion spring(108) to dampen noise and vibrations while a torque of the primary flywheel(105) is transferred to the secondary flywheel(106);
a unit groove(111) formed in the primary flywheel(105) to accommodate the drive units(110);
separation prevention bosses(113) formed above and below a center line of the unit groove(111) and having an operation slot(112) therebetween to prevent deviation of the drive units(110); and
driving pins(114) protruding from a bottom surface of the secondary flywheel(106) to compress and damp the drive units(110),
wherein a linear spring(117) and a curved spring(118) of a torsion spring(108) are combined between an end guide (115) and a middle guide(116) or between the middle guides (116) to prevent a contacting point of a guide body(120) of the middle guide(116) from being pushed to the outside by a centrifugal force when the drive unit(110) is operated.

2. The dual mass flywheel(100) of claim 1, wherein spring maintainers(119) are integrally formed at opposite ends of the end guide(115) and the middle guide(116) to maintain the torsion spring(108).

3. The dual mass flywheel(100) of claim 1, wherein an inner circumferential surface(123) and an outer circumferential surface(124) of the guide body(120) of the middle guide(115) contacting an inner wall surface(121) and an outer wall surface(122) of the unit groove(111) formed in the primary flywheel(105) are inclined to make a predetermined angle(θ) between the tangents of central portions of the inner circumferential surface(123) and the outer circumferential surface(124), and an inner circumferential surface(123) and an outer circumferential surface(124) of the guide body(120) respectively to be spaced apart from the inner wall surface(121) and the outer wall surface(122) of the unit groove(111) so that the guide body (120) maintains a contacting point contacts (P) with the inner and outer wall surfaces(121,122) of the unit groove(111).

4. The dual mass flywheel(1 00) of claim 2, wherein the spring maintainer(119) includes spring grooves(125) formed at opposite sides of the guide body(120) of the middle guide(116) and end guide(115) to accommodate opposite ends of an outer diameter part of the linear spring(117) and the curved spring(118), and a maintaining boss(126) coupled to and maintained at an inner diameter part of the linear spring(117) and the curved spring(118) at a center of the spring groove(125).
